# FASCICULE DE BREVET EUROPEEN

(11) **EP 0 611 672 B1**
(45) Date de publication et mention de la délivrance du brevet: **25.02.1998**
(21) Numéro de dépôt: 94105771.3
(22) Date de dépôt: 06.09.1990
(51) Int. Cl.: B60J 1/02, B60J 10/02, C03C 27/04

(54) **Vitrage avec cadre profile particulierement vitrage automobile**
Verglasung mit einem Profilrahmen, insbesondere Fahrzeugverglasung
Glazing with profile frame, in particular vehicle glazing

(30) Priorité: 12.09.1989 DE 3930414; 31.05.1990 US 531191
(43) Date de publication de la demande: 24.08.1994
(62) Demande divisionnaire de: 90402445.2
(73) Titulaire: SAINT-GOBAIN VITRAGE, 92400 Courbevoie (FR); VEGLA Vereinigte Glaswerke GmbH, 52066 Aachen (DE)
(72) Inventeur: Cornils, Gerd, D-5161 Merzenich-Girbelsrath (DE); Schnitter, Heinrich, D-5107 Simmerath (DE); Kunert, Heinz, D-5000 Köln 41 (DE)
(74) Mandataire: Breton, Jean-Claude

(56) Documents cités:
- EP-A- 0 122 636
- EP-A- 0 345 134
- DE-A- 3 323 006
- DE-U- 8 202 672
- FR-A- 2 266 669
- US-A- 4 581 276

## Description

L'invention concerne un vitrage prévu pour le collage sur la tôle d'une baie de fenêtre, en particulier un vitrage automobile. Celui-ci est équipé notamment par extrusion d'un polymère adapté sur la surface du verre en face de la tôle, d'un cadre profilé qui, après polymérisation, servira grâce à un appendice, d'élément de protection et de centrage pendant la prise de la colle fixant le vitrage.

Les vitrages automobiles sont aujourd'hui dans leur majorité collés directement sur la tôle de la baie dans la carrosserie. Il s'est avéré intéressant de préparer le vitrage en vue de son montage par une phase de travail préliminaire par exemple dans l'usine où le vitrage a été produit. On l'équipe ainsi d'un profilé par extrusion sur le vitrage qui, après polymérisation, coopérera avec le vitrage et le cordon de colle destiné au collage final du vitrage. En procédant de la sorte on limite, lors du montage du pare-brise, les opérations de nettoyage et de primage du vitrage. Globalement l'opération de préparation et de montage du vitrage est ainsi plus économique. Ce procédé est décrit par exemple dans le brevet EP-A-0 121 481.

Mais lorsqu'on pose le vitrage dans la baie de la carrosserie, il est essentiel qu'il occupe, durant la phase de prise du cordon de colle, une place bien définie et qu'il la garde. On utilise pour ce faire des dispositifs ou des accessoires adaptés, ainsi, dans la demande de brevet EP-A-307 317 on décrit un dispositif avec des tiges dirigées vers la surface du vitrage qui comportent une surface d'appui. Lors du montage du pare-brise elles servent à en supporter le poids, en effet elles exercent une réaction sur la baie de la fenêtre. Cette solution bien connue nécessite cependant des éléments d'appui supplémentaires dans la baie. Par ailleurs, il est nécessaire de surveiller la position précise du vitrage dans la baie de manière que l'écart entre le bord du vitrage et la carrosserie tel qu'il est visible de l'extérieur soit constant. S'il n'en était pas ainsi, les irrégularités de largeur obligeraient à disposer un cache pour obturer la rainure.

L'invention se donne pour mission de modifier un vitrage équipé d'un cadre profilé du type précédemment décrit de telle sorte que le centrage et l'appui du vitrage pendant la prise de la colle s'effectue sans intervention d'autres moyens.

Selon l'invention le vitrage, particulièrement un vitrage automobile destiné au collage direct dans le cadre de la baie d'une fenêtre est équipé d'un cadre profilé, déposé sur une couche opaque de la surface du verre en face de la tôle, qui servira grâce à un appendice, d'élément de protection et de centrage pendant la prise de la colle fixant le vitrage, ledit appendice du cadre profilé étant une lèvre, sensiblement parallèle à la surface du verre, qui déborde du vitrage et qui lorsque le vitrage est posé s'appuie sur la tôle de la baie parallèle au chant du vitrage, le cadre profilé étant limité latéralement pour permettre un contact direct entre le cordon de colle et la couche opaque.

Dans une variante, on adjoint au cadre profilé, une deuxième partie dont le rôle est de limiter l'expansion de la colle.

De préférence, la lèvre a une longueur comprise entre 5 et 10 mm.

Par ailleurs, le cadre profilé y compris sa lèvre de protection et de centrage est constitué d'un élastomère.

De préférence, une couche de primaire a été déposée sur la couche opaque.

Si l'on souhaite laisser le canal situé entre la périphérie du vitrage et la partie de carrosserie qui lui fait face libre de tout cache protecteur, on laisse alors la lèvre qui déborde du vitrage visible de l'extérieur. Dans ce cas, des mesures particulières sont à prendre pour que la zone de transition entre le début et la fin du cadre profilé aient le même aspect que le reste du profilé.

Ces mesures consistent en un procédé de fabrication du vitrage avec un cadre profilé continu et qui possède une régularité et une conformité telles qu'elles autorisent de renoncer à l'utilisation d'un cache profilé.

Ce procédé permet de fabriquer un vitrage, en particulier un vitrage automobile, destiné au collage direct dans le cadre de la baie d'une fenêtre, le vitrage étant équipé, par l'extrusion d'un polymère, d'un cadre profilé qui possède une lèvre débordant du vitrage et sensiblement parallèle à la surface du verre. Selon ce procédé, on place une buse d'extrusion profilée sur le bord du vitrage et on la déplace le long de celui-ci en l'alimentant régulièrement avec le polymère lorsqu'elle a rejoint les environs de sa position de départ. On utilise pour l'extrusion un polymère avec une viscosité et une thixotropie telles que la lèvre débordant de la périphérie du vitrage reste en place sans appui.

Le domaine de transition entre le début et la fin du profilé extrudé est rectifié par des outils calibrés. Après polymérisation, la bavure qui subsiste est séparée. Il est prévu également de placer entre les outils et le profilé extrudé des films minces qui restent au contact du profilé à la fin de la rectification et qui sont séparés après prise du polymère.

Il est également prévu qu'on ébavure l'extrémité de la lèvre avec ses deux films protecteurs puis qu'on sépare les deux films protecteurs eux-mêmes du profilé.

Les matériaux utilisés pour les films protecteurs sont du polyéthylène ou du polyester avec une épaisseur de 3 à 2O µm, lorsqu'on utilise un polymère qui polymérise à l'humidité de l'air, le film recouvrant le profilé est un film perméable à la vapeur d'eau. Il peut être poreux ou percé de microperforations. Par ailleurs, les films sont fixés par dépression sur les surfaces des outils de pressage.

Dans ce procédé, les outils de pressage sont en deux parties, le poinçon constituant la partie supérieure, avec une surface inférieure calibrée, est placé sur le profilé sous une inclinaison telle que c'est la partie du poinçon opposée à la lèvre qui touche la première le vitrage et ensuite seulement, le poinçon dans un mouvement de bascule vient au contact du pied qui constitue la partie inférieure de l'outil de pressage.

Le poinçon peut également comporter deux parties l'une rectifiant la surface du cadre profilé qui est au-dessus du vitrage tandis que la deuxième, mobile par rapport à la première, venant rectifier la lève débordante. Par ailleurs, le pied inférieur et le poinçon sont équipés de perçages débouchant sur leur surface de référence et d'ajutages répartiteurs.

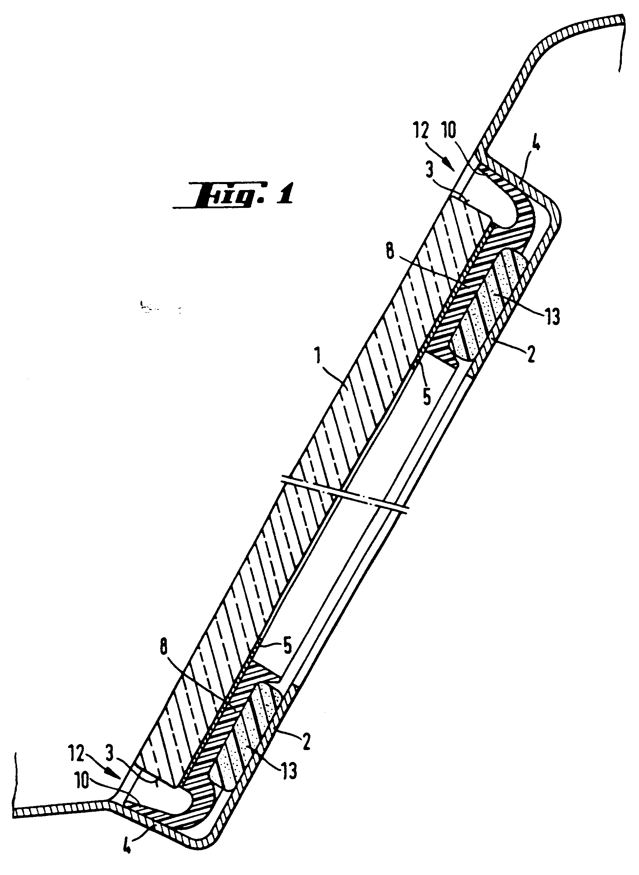

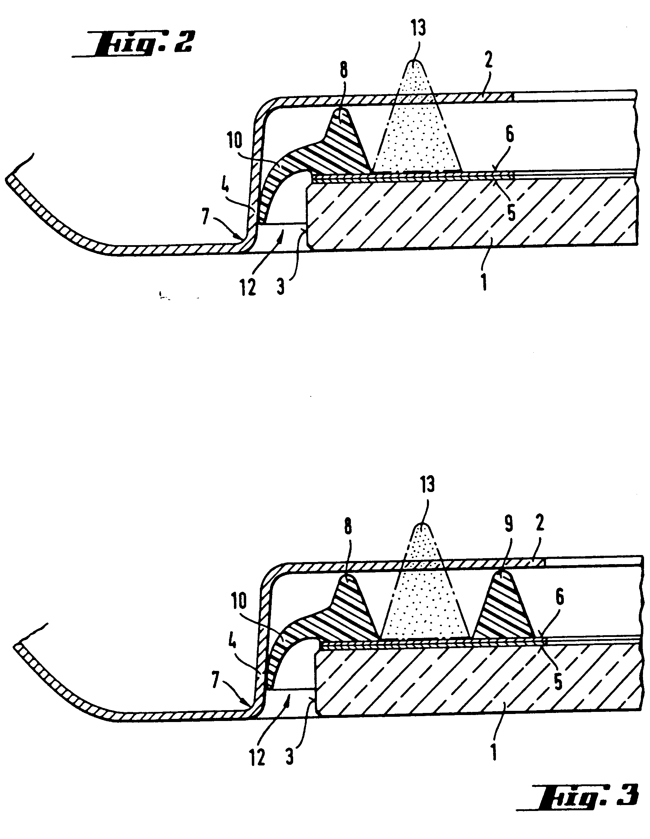

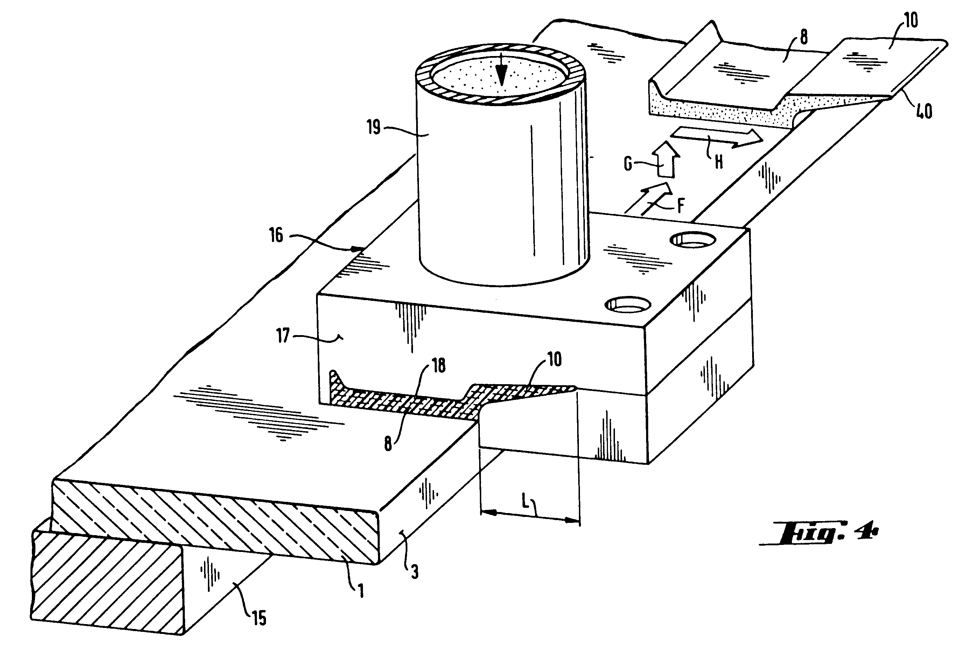

Les détails et les avantages de l'invention sont expliqués dans ce qui suit grâce aux figures. Parmi celles-ci, les figures 2 et 3 illustrent l'invention, la figure 1 et les figures 4 à 8 qui décrivent l'invention objet de la demande de brevet d'origine, facilitent la compréhension de l'invention objet de la présente demande divisionnaire. Parmi les figures, on trouve ainsi :
- figure 1 : vitrage en position dans une baie et en coupe,
- figure 2 et figure 3 : exemples de vitrages conformes à l'invention,
- figure 4 : fabrication du cadre profilé grâce à une buse d'extrusion,
- figure 5 : la zone de transition du cadre profilé après le retrait de la buse d'extrusion,
- figure 6 : la rectification par pressage de la zone de transition grâce à un outil,
- figure 7 : la zone de transition du cadre profilé après la phase de pressage et,
- figure 8: une variante de l'outil de pressage .

Dans la configuration représentée figure 1 le vitrage 1 est un pare-brise, il est placé dans la baie d'une carrosserie automobile. Cette baie est limitée d'une part par la tôle de fixation 2 qui est parallèle à la surface du vitrage, et d'autre part par la tôle 4 dont la surface est perpendiculaire à la surface du vitrage. Le vitrage 1 est représenté sous forme d'une feuille de verre monolithique mais il est bien évident qu'il peut s'agir aussi bien d'un vitrage feuilleté. Le vitrage 1 est équipé à sa périphérie sur la surface opposée à la tôle de fixation 2 d'une couche opaque 5 qui est par exemple constituée d'un émail cuit à chaud. La fonction de cette couche 5 est d'éviter que l'on puisse voir au travers du vitrage, à partir de l'extérieur, les éléments de collage et en même temps de protéger la colle contre les ultra-violets.

Le vitrage 1 est équipé sur sa surface opposée à la tôle de fixation 2 d'un cadre profilé 8. Celui-ci est réalisé en un polymère qui, une fois terminé, possède les caractéristiques d'un élastomère. Le cadre profilé 8 adhère à la couche opaque 5. Le cadre profilé 8 possède une lèvre périphérique 10. Cette lèvre 10 possède avant l'introduction du vitrage 1 dans la baie une forme droite. Elle est à ce moment sensiblement parallèle à la surface du vitrage et déborde de sa périphérie 3 d'environ 5 à 10 mm.

La lèvre 10 se déforme au moment de l'introduction du vitrage dans la baie et subit une pliure vers l'arrière en se positionnant sur toute sa longueur le long de la tôle 4 qui se trouve vis à vis du chant 3 du vitrage. De cette manière lorsque le vitrage est introduit dans la baie, il se trouve automatiquement centré et on voit apparaître une rainure 12 de largeur constante tout autour. Par ailleurs, la lèvre 10 est utilisée dans la partie inférieure du vitrage 1 pour supporter son poids de telle sorte qu'aucun calage n'est plus nécessaire pendant le temps qui sépare la mise en place du vitrage et la prise de la colle. De plus, la lèvre 10 sert à fermer la rainure 12 et elle la rend étanche.

Le dimensionnement de la lèvre 10, c'est-à-dire la longueur et l'épaisseur de sa section doit être déterminé de telle sorte que les fonctions à remplir par la lèvre 10 le soient le mieux possible.

Sur la figure 2, on voit un mode de réalisation du profilé 8 selon l'invention. La figure 2 représente ainsi une coupe du vitrage 1 posé dans la baie de la fenêtre de la carrosserie 7. Ici le cordon de colle 13 au lieu de n'être en contact du côté du vitrage 1, qu'avec le profilé 8, est, en plus, en contact direct avec le vitrage 1 ou plus précisément avec la couche opaque 5. Un primaire d'adhérence 6 peut être prévu pour favoriser l'accrochage du cordon de colle 13 sur le vitrage.

Une variante de cette configuration est représentée en coupe sur la figure 3. On voit en 9 une deuxième partie du profilé périphérique dont le rôle est de limiter l'expansion de la colle 13. Les autres éléments y compris le cadre opaque 5 restent les mêmes que sur la figure 2.

Dans la description et les figures suivantes cette couche 5 en forme de cadre n'est plus représentée pour des raisons de simplicité.

La liaison entre le vitrage lui-même et/ou le cadre profilé 8 d'une part qui équipe le vitrage 1 au moment de sa pose et d'autre part la tôle de fixation 2 est réalisée comme on l'a vu grâce au cordon de colle 13. La colle est composée d'un polymère qui est conçu pour adhérer de manière fixe et permanente au cadre 8 et à la couche 5. Ce sera par exemple un polyuréthane mono-composant polymérisant grâce à l'humidité de l'air. La pression qui doit être exercée pendant la durée de prise du cordon de colle 13 entre le vitrage et la tôle de fixation 2 est également assurée grâce à la lèvre 10 du cadre profilé 8. Elle possède en effet un fort coefficient de frottement et sa raideur relative lui permet de compenser la force de réaction exercée par le cordon de colle 13.

La fabrication du cadre profilé 8 se fait d'une manière connue en soi par extrusion d'un polymère adapté et qui adhère sur le vitrage. De tels polymères adaptés à la fabrication d'un cadre profilé sont par exemple des polyuréthanes à un composant sous forme pâteuse qui se transforment sous l'influence de l'humidité de l'air en élastomère à module élevé. Des systèmes polymères de la sorte sont décrits par exemple dans le brevet américain US 3 779 794. Il est également possible d'utiliser des systèmes à deux composants comme ceux qui sont décrits dans les brevets européens EP-A-0083797 ou EP-A-0024501. En fonction de la nature de la colle utilisée il aura fallu préparer la surface sur laquelle le cordon est déposé à l'aide de couches de primage telles que la couche 6 selon des procédés connus.

Pour déposer le cadre profilé 8 sur le vitrage 1, on commence comme il est représenté figure 2 par déposer le vitrage sur un cadre support 15 de manière à ce qu'il soit en position horizontale. Il est fixé dans cette position par des moyens adaptés, par exemple des ventouses. On déplace alors la tête d'extrusion le long du bord du vitrage. Cette opération est effectuée de préférence par un robot programmé en conséquence. La tête d'extrusion possède une buse 16 qui est appliquée sur le verre et se déplace dans le ses de la flèche F. La buse 16 possède sur sa face arrière 17 une ouverture calibrée 18. Celle-ci fournit au profilé 8 la forme souhaitée. La stabilité de la forme de la lèvre 10 qui est engendrée par la buse d'extrusion sur une longueur L est telle que la lèvre 10 garde sa forme et sa direction sensiblement horizontale sans avoir besoin d'être soutenue. Ce résultat est obtenu par le choix des propriétés de viscosité et de thixotropie de la matière polymérisable. Celle-ci est amenée à la buse d'extrusion 16 par le tube 19. Ce tube relie la tête d'extrusion 16 à un dispositif de pompage et de dosage qui permet de délivrer le fluide avec la pression et le débit voulus à la tête d'extrusion 16. L'extrusion s'effectue tout le long de la périphérie 3 du vitrage 1. On obtient ainsi un cadre profité 8 fermé sur lui-même. A l'instant précis où la buse 16 atteint l'emplacement où l'extrusion a commencé, le débit de polymère est stoppé de même que le déplacement de la tête d'extrusion. La tête d'extrusion 16 est alors déplacée légèrement dans la direction de la flèche G ce qui l'écarte du verre puis un autre déplacement a lieu perpendiculairement, dans la direction de la flèche H.

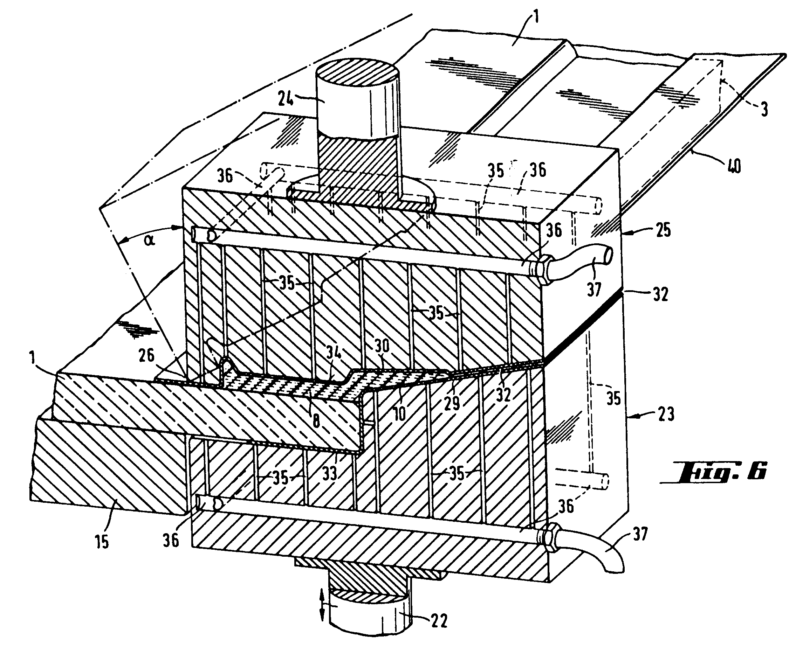

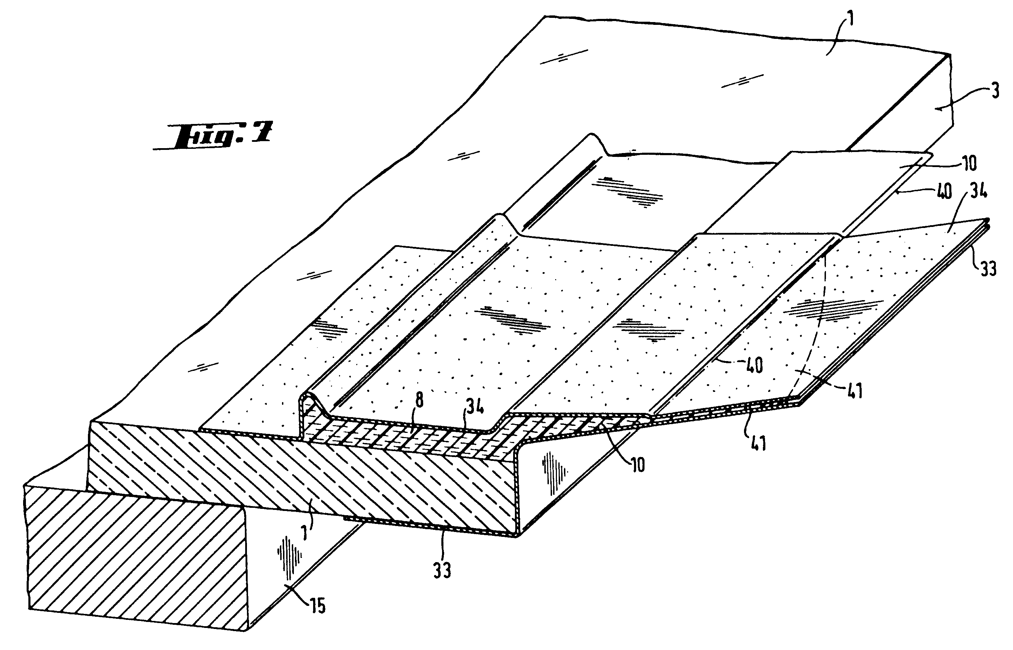

Comme le montre la figure 5, les opérations précédentes fournissent à l'endroit où la tête d'extrusion 16 s'est écartée du verre, c'est-à-dire à la soudure entre le départ et l'arrivée du cadre profité 8, une discontinuité informe. Ce point de soudure, zone de transition entre deux parties du cadre qui ont un profit parfait, nécessite d'être traité séparément dans une phase de fabrication supplémentaire qui est représentée dans les figures 6 à 8. Pendant l'opération de rectification de la zone de transition du cadre profité 8 le vitrage 1 repose toujours sur son cadre support 15. Dès que la tête d'extrusion a été écartée du vitrage un porte-outil adapté et non représenté sur les figures présente un outil en deux parties sur te vitrage : un pied inférieur 23 qui est associé au porte-outil par la liaison 22 ainsi qu'un poinçon 25 qui est porté, lui, grâce à la liaison 24. Le pied 23 dès qu'il a touché le vitrage par en dessous, se déplace pour venir en butée contre le bord du verre. Le poinçon 25 se présente incliné d'un angle α par rapport au vitrage puis est déplacé dans cette position vers le bas jusqu'à ce que son arête 26 touche la surface du verre. Il entame alors un mouvement de rotation autour de cette arête jusqu' à venir au contact de la feuille de verre et du pied 23. On obtient ainsi que le cadre profité y compris sa lèvre 10 prenne la forme voulue à l'endroit du raccord du profité. L'irrégularité est alors supprimée.

La partie supérieure du pied 23 a une forme 29 qui correspond à l'épaisseur du vitrage 1 et qui suit la partie inférieure de la lèvre 10. De même le poinçon 25 a lui aussi une forme précise 30 qui correspond à la limite supérieure du profité 8 et de la lèvre 10. Le mouvement de translation et de basculement subi par le poinçon 25 permet de remplir les lacunes éventuelles du profilé et d'évacuer l'excès de matières dans le prolongement de la lèvre 10 au travers de ta fente 32. Après polymérisation de l'étastomère, l'excès de matière pourra être ébavuré à l'extrémité de la lèvre 10.

Avant de débuter la phase de rectification précédente, c'est-à-dire lorsque l'outil de pressage est en position d'attente, on a déposé sur les surfaces 29 du pied 23 et 30 du poinçon 25 une feuille 33, 34 d'une épaisseur de 4 à 1O µm. La dimension de cette feuille est dans chaque cas celle de la pièce concernée. Les feuilles 33 et 34 doivent épouser exactement les surfaces qu'elles recouvrent. C'est pourquoi aussi bien le pied 23 que le poinçon 24 sont équipés d'une série de perçages 35 qui débouchent sur les surfaces 29 ou 30. Ces perçages sont reliés à des ajutages répartiteurs 36. L'un de ceux-ci est relié par un tuyau souple 37 à une pompe non représentée. La pompe crée une dépression qui plaque les feuilles 33 et 34 sur chacune des deux surfaces 29 et 30. A la fin de l'opération de rectification, les tuyaux 37 sont remplis d'air ce qui permet aux feuilles 33 et 34 de se séparer des outils de pressage. Les feuilles 33 et 34 restent plaquées contre le matériau du profité 8 mais n'y adhèrent pas. On peut donc les en séparer facilement à la fin de la polymérisation.

Les feuilles 33, 34 sont constituées d'un matériau dont la surface a des propriétés anti-adhésives par rapport au matériau polymère du profité 8. De bons résultats ont été obtenus avec des feuilles minces de polyester ou de polyéthylène. Dans le cas où le polymère du cadre profité 8 polymérise à l'humidité de l'air, il convient que les feuilles 33 et 34 possèdent une perméabilité suffisante à la vapeur d'eau. Eventuellement, il sera nécessaire de créer une porosité déterminée ou même de percer des microperforations.

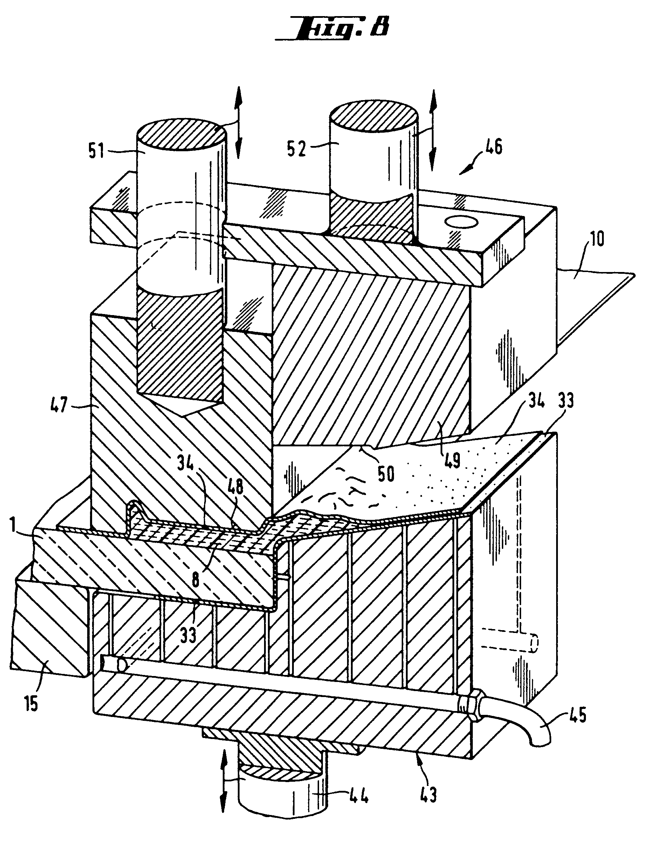

Les feuilles 34, 35 confèrent de plus à la lèvre 10 une rigidité supplémentaire durant la prise. L'excès de matière polymérisable est évacué pendant le processus de rectification ainsi qu'on l'a déjà vu, en direction du prolongement de la lèvre 10 et s'échappe sous forme d'une couche mince entre les deux feuilles 33, 34 où elle va durcir sous forme d'une bavure 41 qui déborde de la bordure 4O de la lèvre 1O (figure 7). Cette bavure 41 sera comme les feuilles 33 et 34, coupée et séparée du profité 8 après polymérisation. Cette opération procure dans la zone de raccordement un aspect soigné à la lèvre 10 du cadre profité 8. Pour terminer on arrache les feuilles 33, 34 restantes pour les séparer du profité 8 et de la lèvre 10.

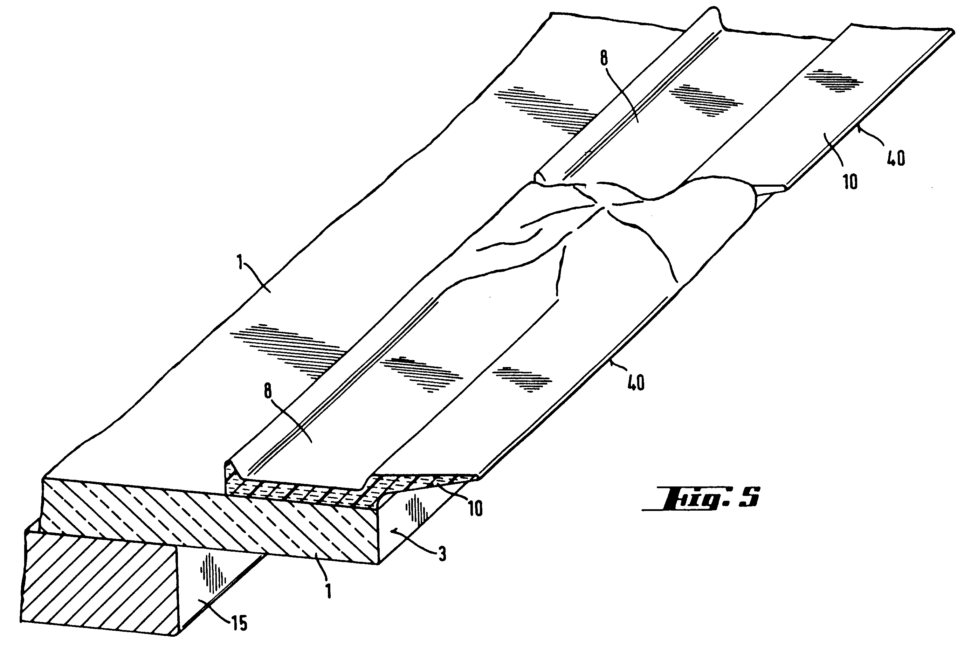

Sur la figure 8 on présente un autre mode de réalisation de l'outil de rectification. Le pied 43 a une constitution qui s'apparente à celle du pied 23 de la figure 4. Le pied est relié par une tige de guidage 44, tout comme le poinçon 46, à un porte-outil non représenté. Le pied 43 est ici aussi équipé sur sa surface supérieure de perforations. Celles-ci sont également reliées à un ajutage répartiteur qui est en communication grâce à un tuyau 45 avec une pompe qui peut y créer une dépression.

Le poinçon 46 est constitué de deux parties : la première 47 qui comporte une surface de référence 48 correspondant à la section du cadre profité qui se trouve au-dessus du verre, et une deuxième partie 49 elle aussi équipée d'une surface catibrée 50 destinée à conformer la lèvre 10. Les deux parties, la première 47 grâce à ta tige de guidage 51, et la deuxième 49 grâce à la tige 52 peuvent être manoeuvrées indépendamment l'une de l'autre. Après que te pied 43 ait été mis en place mais avant que le poinçon n'ait effectué ses propres mouvements, le film plastique qui va ici aussi s'intercaler entre le poinçon et le cadre profité est mis en place à la fois sur le joint informe et sur les surfaces voisines du vitrage 1 et du pied 43. Alors, la partie 47 du poinçon se déplace la première et vient épouser la partie supérieure du profité 8 situé au-dessus du vitrage 1. Enfin, la partie 49 du même poinçon vient à son tour rectifier la forme de la lèvre 10.

Les exemples de réalisation de l'invention présentés ici sont relatifs au pare-brise d'un véhicule automobile. L'invention est aussi bien valable dans les mêmes conditions pour n'importe quel vitrage comme par exemple les lunettes arrière ou les vitrages de portière, de custode, de hayon, de toit ou de protection de phares. Par ailleurs, la méthode de t'invention convient également à tous les domaines où un vitrage doit être fixé par collage à l'intérieur d'un cadre. Dans le domaine des transports, ce sera le cas par exemple des vitrages de chemin de fer ou de caravane mais les applications dans le domaine du bâtiment, dans celui du mobilier, ou même de l'appareillage ou de l'étectroménager sont également à envisager.

## Revendications

1. Vitrage (1), particulièrement vitrage automobile destiné au collage direct dans le cadre de la baie d'une fenêtre, équipé d'un cadre profité (8) déposé sur une couche opaque (5) de la surface du verre en face de la tôle, qui servira grâce à un appendice, d'élément de protection et de centrage pendant la prise de la colle fixant le vitrage (1), ledit appendice du cadre profité (8) étant une lèvre (10), qui déborde du vitrage (1), sensiblement parallèle à la surface du verre, et qui lorsque le vitrage est posé, s'appuie sur la tôle de la baie parallèle au chant du vitrage, caractérisé en ce que le cadre profité est limité tatéralement pour permettre un contact direct entre le cordon de colle (13) et la couche opaque (5).

2. Vitrage selon la revendication 1, caractérisé en ce qu'au cadre profité (8) on adjoint une deuxième partie (9) dont le rôle est de limiter l'expansion de la cotte (13).

3. Vitrage selon la revendication 1 ou 2, caractérisé en ce que la lèvre (10) qui déborde du chant (3) du vitrage (1) a une longueur (L) comprise entre environ 5 et 10 mm.

4. Vitrage selon l'une des revendications 1, 2 ou 3, caractérisé en ce que le cadre profité (8) y compris sa lèvre de protection et de centrage (10) est constitué d'un élastomère.

5. Vitrage selon l'une des revendications précédentes, caractérisé en ce qu'une couche de primaire (6) a été déposée sur la couche opaque (5).

## Claims

1. Pane (1), especially automobile pane intended to be glued directly into the frame of the opening of a window, the pane being equipped with a profiled frame (8) deposited on an opaque film (5) of the surface of the glass opposite the metal sheeting, which frame will serve, by means of an appendage, as a protective and centering element during the setting of the adhesive fixing the panel (1), said appendage of the profiled frame (8) being a lip (10) which projects beyond the pane (1) substantially parallel to the surface of the glass and which, while the pane is being positioned, bears against the metal sheeting of the window opening parallel to the edge face of the pane, characterized in that the profiled frame is limited laterally to permit a direct contact between the cord of adhesive (13) and the opaque film (5).

2. Pane according to claim 1, characterized in that a second part (9) is adjoined to the profiled frame (8), this second part having the function of limiting the expansion of the adhesive (13).

3. Pane according to claim 1 or 2, characterized in that the lip (10) which projects beyond the edge face (3) of the pane (1) has a length (L) of between approximately 5 and 10 mm.

4. Pane according to one of claims 1, 2 or 3, characterized in that the profiled frame (8), including its protective and centering lip (10), is constituted of an elastomer.

5. Pane according to one of the preceding claims, characterized in that a film of primer (6) has been deposited on the opaque film (5).

## Patentansprüche

1. Verglasung (1), insbesondere Autoglasscheibe für die unmittelbare Verklebung im Rahmen einer Fensteröffnung, mit einem auf einer lichtundurchlässigen Schicht (5) der Glasoberfläche gegenüber dem Klebeflansch aufgebrachten profilierten Rahmen (8), der dank eines Ansatzes als Schutz- und Zentrierelement während der Aushärtung des die Glasscheibe (1) befestigenden Klebers dient, wobei der Ansatz des profilierten Rahmens (8) eine Lippe (10) ist, die den Rand der Glasscheibe (1) überragt, sich im wesentlichen parallel zur Glasoberfläche erstreckt und sich, wenn die Glasscheibe eingesetzt ist, auf dem parallel zur Umfangsfläche der Glasscheibe verlaufenden Blechflansch des Fensterrahmens abstützt,**dadurch gekennzeichnet,** daß der profilierte Rahmen seitlich begrenzt ist, um einen unmittelbaren Kontakt zwischen dem Kleberstrang (13) und der lichtundurchlässigen Schicht (5) zu ermoglichen.

2. Verglasung nach Anspruch 1, dadurch gekennzeichnet, daß dem profilierten Rahmen (8) ein zweiter Teil (9) zugefügt wird, dessen Rolle darin besteht, die Ausdehnung des Klebers (13) zu begrenzen.

3. Verglasung nach Anspruch 1 oder 2, dadurch gekennzeichnet, daß die die Umfangsfläche (3) der Glasscheibe (1) überragende Lippe (10) eine Länge (L) von etwa 5 bis 10 mm aufweist.

4. Verglasung nach einem der Ansprüche 1, 2 oder 3, dadurch gekennzeichnet, daß der profilierte Rahmen (8) einschließlich seiner Schutz- und Zentrierlippe (10) aus einem Elastomer besteht.

5. Verglasung nach einem der vorausgehenden Ansprüche, dadurch gekennzeichnet, daß auf der lichtundurchlässigen Schicht (5) eine Haftvermittlerschicht (6) aufgebracht wurde.
